# EUROPÄISCHE PATENTSCHRIFT

(11) **EP 1 763 541 B1**
(45) Veröffentlichungstag und Bekanntmachung des Hinweises auf die Patenterteilung: **05.12.2007**
(21) Anmeldenummer: 05769639.5
(22) Anmeldetag: 23.06.2005
(51) Int. Cl.: C08F 2/38, C08F 218/08, C08L 31/04, C08F 220/04

(54) **Verwendung von mit Säuregruppen funktionalisierten Polyvinylacetat-Festharzen als Low-Profile-Additiv**
Use of polyvinyl acetate solid resins functionalised with acid groups as low-profile additive
Utilisation de résines solides polyvinylacétate fonctionnalisées avec des groupes acides en tant qu'additif à faible retrait

(30) Priorität: 01.07.2004 DE 102004031968
(43) Veröffentlichungstag der Anmeldung: 21.03.2007
(73) Patentinhaber: Wacker Polymer Systems GmbH & Co. KG, 84489 Burghausen (DE)
(72) Erfinder: GRÄWE, René, 84489 Burghausen (DE); LUMPP, Andreas, 13084-190 Campinas S.P (BR)
(74) Vertreter: Schuderer, Michael
(86) Internationale Anmeldenummer: PCT/EP2005/006821
(87) Internationale Veröffentlichungsnummer: WO 2006/002833

(56) Entgegenhaltungen:
- EP-A- 0 319 203
- EP-A- 0 501 176
- EP-A- 0 831 153
- DATABASE CA [Online] CHEMICAL ABSTRACTS SERVICE, COLUMBUS, OHIO, US; 15. April 1988 (1988-04-15), MARQUES, ADEMIR AZEVEDO ET AL: "Process and preparation of a synthetic polymer for preventing precipitation of zinc and iron salts in boiler waters and water towers" XP002347388 gefunden im STN Database accession no. 1988:137660 -& BR 8 700 832 A (AQUATEC QUIMICA S. A., BRAZIL) 18. August 1987 (1987-08-18)
- DATABASE WPI Week 199330 Derwent Publications Ltd., London, GB; AN 1993-240142 XP002347392 -& JP 05 163425 A (MITSUI TOATSU CHEM INC) 29. Juni 1993 (1993-06-29)

## Beschreibung

Die Erfindung betrifft die Verwendung von mit Säuregruppen funktionalisierten Polyvinylacetat-Festharzen als Low-Profile-Additiv.

Bei der Herstellung von flächigen Kunststoffteilen werden häufig ungesättigte Polyesterharze (UP-Harze) eingesetzt, welche mittels Glasfaser oder Kohlefaser verstärkt werden. Zur Reduzierung des Schrumpfs bei der Aushärtung des Polyesterharzes werden diesem sogenannte Low-Profile-Additive zugegeben. Das Low-Profile-Additiv reduziert das Schrumpfen beim Aushärten, baut Eigenspannungen ab, verringert Mikrorissbildung, und erleichtert die Einhaltung von Fertigungstoleranzen. Bei den Low-Profile-Additiven handelt es sich um Thermoplaste wie Polystyrol, Polymethylmethacrylat und insbesondere Polyvinylacetat, welche häufig noch carboxylfunktionelle Comonomereinheiten enthalten. Bei der Anwendung von Low-Profile-Additiven ist eine gute Löslichkeit in Styrol, eine niedrige Ausgangsviskosität der Styrollösung und ein schneller Verdickungseffekt mit stabilem Endniveau erwünscht. Herkömmliche Low-Profile-Additive, beispielsweise auf der Basis von Polyvinylacetaten mit carboxylfunktionelle Comonomereinheiten, können bezüglich Ausgangsviskosität und Verdickungseffekt noch nicht voll zufriedenstellen.

Aus der EP 0831153 A1 ist die Verwendung von carboxylfunktionellen Vinylacetatpolymerisaten zur Lederbehandlung bekannt. Das brasilianische Patent BR 8700832 empfiehlt Copolymerisate von Acrylsäure und Vinylether, welche endständige Carboxylgruppen aufweisen, als Beschichtungsmittel zur Belagsverhinderung. Aus der JP-A 51-63425 sind Polyesterharz-Zusammensetzungen bekannt, welche mit epoxidfunktionellem Styrol-Methylmethacrylat-Polymerisat und mit einem Vinylacetatpolymerisat mit endständigen Carboxylgruppen modifiziert sind.

Es bestand daher die Aufgabe, Polyvinylacetat-Festharze zur Verfügung zu stellen, welche bezüglich des vorgenannten Eigenschaftsprofils für Low-Profile-Additive optimiert sind.

Gegenstand der Erfindung ist die Verwendung von mit Säuregruppen funktionalisierten Polyvinylacetat-Festharzen als Low-Profile-Additiv dadurch gekennzeichnet, dass das Polyvinylacetat-Festharz neben carboxylfunktionellen Comonomereinheiten noch endständige Carboxylgruppen enthält.

Das mit Säuregruppen funktionalisierte Festharz ist vorzugsweise erhältlich durch Polymerisation von
a) 85 bis 99.8 Gew.-% Vinylacetat, und
b) 0.1 bis 10 Gew.-% einer oder mehrerer ethylenisch ungesättigter Monocarbonsäuren, in Gegenwart von
c) 0.1 bis 5 Gew.-% ein oder mehrere Mercaptoalkylcarbonsäuren mit 2 bis 6 C-Atomen,
wobei sich die Angaben in Gew.-% auf 100 Gew.-% aufaddieren.

Vorzugsweise werden 90 bis 99 Gew.-% Vinylacetat eingesetzt.

Bevorzugte ethylenisch ungesättigte Monocarbonsäuren sind Acrylsäure, Methacrylsäure, Crotonsäure. Vorzugsweise werden die ethylenisch ungesättigten Säuren in einem Anteil von 0.2 bis 5 Gew.-%, bezogen auf das Gesamtgewicht der Komponenten a) bis c), polymerisiert.

Die Mercaptoalkylcarbonsäuren dienen zur Einführung der terminalen Carboxylgruppen. Bevorzugt werden Mercaptoessigsäure und Mercaptopropionsäure. Vorzugsweise werden die Mercaptoalkylcarbonsäuren in einem Anteil von 0.2 bis 1 Gew.-%, bezogen auf das Gesamtgewicht der Komponenten a) bis c), eingesetzt.

Das gewichtsmittlere Molekulargewicht Mw der mit Säuregruppen funktionalisierten Polyvinylacetat-Festharze beträgt von 10,000 bis 500,000.

Die Herstellung der mit Säuregruppen funktionalisierten Polyvinylacetat-Festharze erfolgt nach dem Masse-, Suspensions-, oder vorzugsweise Lösungspolymerisations-Verfahren. Geeignete Lösungsmittel sind beispielsweise einwertige, aliphatische Alkohole mit 1 bis 6 C-Atomen, vorzugsweise Methanol, Ethanol, Isopropanol. Die Reaktion wird im allgemeinen unter Rückflußbedingungen, im allgemeinen bei einer Polymerisationstemperatur von 40°C bis 140°C, durchgeführt, um die Siedekühlung zur Abführung der Reaktionswärme zu nutzen. Dies kann bei Normaldruck als auch unter leichtem Überdruck erfolgen. Als Inititatoren werden organische Peroxide oder Azoverbindungen verwendet. Geeignet sind beispielsweise Diacylperoxide wie Dilauroylperoxid, Peroxoester wie t-Butylperoxopivalat oder t-Butylperoxo-2-ethylhexanoat, oder Peroxodicarbonate wie Diethylperoxodicarbonat. Die Initiatormenge beträgt im allgemeinen von 0.01 bis 5.0 Gew.-%, bezogen auf die Monomeren. Die Initiatoren können sowohl vorgelegt als auch dosiert werden. Dabei hat es sich bewährt, einen Teil der benötigten Initiatormenge vorzulegen und den Rest kontinuierlich während der Reaktion zu dosieren.

Zur Herstellung der Polymere kann nach einem Batchverfahren gearbeitet werden, wobei alle Komponenten des Polymerisationsansatzes im Reaktor vorgelegt werden, oder nach einem Semi-Batchverfahren, wobei einzelne oder mehrere Komponenten vorgelegt werden und der Rest zudosiert wird, oder eine kontinuierliche Polymerisation durchgeführt werden, wobei die Komponenten während der Polymerisation zudosiert werden. Die Dosierungen können gegebenenfalls separat (räumlich und zeitlich) durchgeführt werden. Bevorzugt wird der Anteil an Mercaptoalkylcarbonsäure zumindest teilweise während der Polymerisation zudosiert. Nach dem Ende der exothermen Reaktion werden vorzugsweise die restlichen freien Monomeren und das Lösungsmittel destillativ entfernt. Um einen sehr niedrigen VOC-Gehalt zu erhalten, wird die Innentemperatur bis auf 100°C bis 160°C erhöht und anschließend ein Vakuum angelegt.

Für die Anwendung als Low-Profile-Additiv wird das mit Säuregruppen funktionalisierte Polyvinylacetat-Festharz in bekannter Weise in Styrol gelöst und gegebenenfalls mit weiteren Additiven wie Füllstoffen, Verdickern, Initiatoren und Verarbeitungshilfsmitteln appliziert.

Durch die Kombination von copolymerisierten Carboxylgruppen in der Polymerkette und terminalen Carboxylgruppen am Kettenende werden Harzlösungen in Styrol erhalten, die bei Abmischen mit Füllstoffen eine niedrige Ausgangsviskosität, und einen schnellen Verdickungseffekt zeigen, wobei bereits nach 1 Tag das stabile Endniveau erreicht ist.

Die nachfolgenden Beispiele dienen zur weiteren Erläuterung der Erfindung:

### Beispiel 1:

Zu einer Vorlage von 350 g Methanol, 540 g Vinylacetat und 3.5 g Crotonsäure in einem 4-Liter Reaktor wurden unter leichter Siedehitze bei 150 Upm 33 g einer 15 %-igen, methanolischen di-tert.-Butylperpivalat-Lösung über 4 Stunden dosiert. Nach 30 Minuten wurde über 3.5 Stunden eine Mischung aus 1220 g Vinylacetat, 14 g Mercaptopropionsäure und 9 g Crotonsäure dosiert. Nach Ende der Dosierungen wurde die Reaktion noch 2 h bei Siedehitze weitergeführt, dann das Lösemittel und Restmonomer abdestilliert.

### Beispiel 2:

Zu einer Vorlage von 140 g Methanol, 540 g Vinylacetat und 3.5 g Crotonsäure in einem 4-Liter Reaktor wurden unter leichter Siedehitze bei 150 Upm 33 g einer 15 %-igen, methanolischen di-tert.-Butylperpivalat-Lösung über 4 Stunden dosiert. Nach 30 Minuten wurde über 3.5 Stunden eine Mischung aus 1220 g Vinylacetat, 14 g Mercaptopropionsäure und 9 g Crotonsäure dosiert. Nach Ende der Dosierungen wurde die Reaktion noch 2 h bei Siedehitze weitergeführt, dann das Lösemittel und Restmonomer abdestilliert.

### Vergleichsbeispiel 3:

Zu einer Vorlage von 350 g Methanol, 540 g Vinylacetat und 3.5 g Mercaptopropionsäure in einem 4-Liter Reaktor wurden unter leichter Siedehitze bei 150 Upm 33 g einer 15 %-igen, methanolischen di-tert.-Butylperpivalat-Lösung über 4 Stunden dosiert. Nach 30 Minuten wurde über 3.5 Stunden eine Mischung aus 1220 g Vinylacetat, 21 g Mercaptopropionsäure dosiert. Nach Ende der Dosierungen wurde die Reaktion noch 2 h bei Siedehitze weitergeführt, dann das Lösemittel und Restmonomer abdestilliert.

### Vergleichsbeispiel 4:

Zu einer Vorlage von 210 g Methanol, 540 g Vinylacetat in einem 4-Liter Reaktor wurden unter leichter Siedehitze bei 150 Upm 33 g einer 15 %-igen, methanolischen di-tert.-Butylperpivalat-Lösung über 4 Stunden dosiert. Nach 30 Minuten wurde über 3.5 Stunden eine Mischung aus 1220 g Vinylacetat, 14 g Mercaptopropionsäure dosiert. Nach Ende der Dosierungen wurde die Reaktion noch 2 h bei Siedehitze weitergeführt, dann das Lösemittel und Restmonomer abdestilliert.

### Vergleichsbeispiel 5:

Es wurde analog Vergleichsbeispiel 4 vorgegangen, mit dem Unterschied, dass keine Mercaptopropionsäure zudosiert wurde.

### Vergleichsbeispiel 6:

Zu einer Vorlage von 350 g Methanol, 540 g Vinylacetat und 3.5 g Crotonsäure in einem 4-Liter Reaktor wurden unter leichter Siedehitze bei 150 Upm 33 g einer 15 %-igen, methanolischen di-tert.-Butylperpivalat-Lösung über 4 Stunden dosiert. Nach 30 Minuten wurde über 3.5 Stunden eine Mischung aus 1220 g Vinylacetat, 14 g Crotonsäure dosiert. Nach Ende der Dosierungen wurde die Reaktion noch 2 h bei Siedehitze weitergeführt, dann das Lösemittel und Restmonomer abdestilliert.

Zur Testung des Verdickungseffektes wurde wie folgt vorgegangen:

Es wurde jeweils eine Zusammensetzung aus 120 g einer 40 %-igen Lösung des Festharzes in Styrol, 180 g Calciumcarbonat-Füllstoff (Omyacarb 5GU) und 3 g Magnesiumoxid (Luvakol MK-35) wie folgt getestet:
120 g der Festharzlösung wurden in einem 250 ml Schraubglas vorgelegt und 180 g des Calciumcarbonats mit Flügelrührer portionsweise mit relativ hoher Geschwindigkeit (ca. 800-1200 rpm) eingerührt, bis eine homogene Mischung mit einer Temperatur von 27°C erhalten wurde. Dann wurden 3 g des Magnesiumoxids 1 Minute bei 2000 rpm eingerührt und sofort Temperatur und Viskosität (Helipath) bestimmt. Die Messung der Viskosität wurde nach 3 Stunden, nach einem Tag und nach 7 Tagen wiederholt. Die Ergebnisse sind in der Tabelle zusammengefasst.

**Tabelle:**

| | Bsp. 1 | Bsp. 2 | Vbsp. 3 | Vbsp. 4 | Vbsp. 5 | Vbsp. 6 |
|---|---|---|---|---|---|---|
| Crotonsäure [Gew.-%] | 0.7 | 0.7 | 0.0 | 0.0 | 0.0 | 1.0 |
| MPS [Gew.-%] | 0.8 | 0.8 | 1.4 | 0.8 | 0.0 | 0.0 |
| Mol.gewicht [Mw] | 76000 | 85000 | 40000 | 85000 | 130000 | 84000 |
| Viskosität [Pas] 0 h | 11 | 12 | 3 | 12 | 147 | 32 |
| Viskosität [Pas] 3 h | 14800 | 12900 | 7 | 29 | 153 | 706 |
| Viskosität [Pas] 1 d | 33000 | 25500 | 10 | 39 | 154 | 24800 |
| Viskosität [Pas] 7 d | 33000 | 25000 | 10 | 45 | 182 | 33000 |

Die Testergebnisse zeigen, dass man mit Festharzen, welche sowohl Carboxylgruppen in der Kette als auch terminal enthalten, das gewünschte Eigenschaftsprofil niedrige Anfangsviskosität (0 h), schnelles Eindicken (3 h), Viskositätsstabilität nach einem Tag erhält (Beispiele 1/2).

Sind nur terminale Carboxylgruppen vorhanden, erhält man zwar eine niedrige Anfangsviskosität, aber kein Eindicken (Vergleichsbeispiele 3/4).

Ohne terminale Carboxylgruppen ist das Eindicken stark verlangsamt (Vergleichsbeispiel 6).

Ganz ohne Carboxylgruppen resultiert eine hohe Anfangsviskosität ohne weiteren Viskositätsanstieg (Vergleichsbeispiel 7).

## Patentansprüche

1. Verwendung von mit Säuregruppen funktionalisierten Polyvinylacetat-Festharze als Low-Profile-Additive, **dadurch gekennzeichnet, dass** das Polyvinylacetat-Festharz neben carboxylfunktionellen Comonomereinheiten noch endständige Carboxylgruppen enthält.

2. Verwendung nach Anspruch 1, wobei die mit Säuregruppen funktionalisierten Polyvinylacetat-Festharze durch Polymerisation von
a) 85 bis 99.8 Gew.-% Vinylacetat, und
b) 0.1 bis 10 Gew.-% einer oder mehrerer ethylenisch ungesättigter Monocarbonsäuren,
in Gegenwart von
c) 0.1 bis 5 Gew.-% ein oder mehrere Mercaptoalkylcarbonsäuren mit 2 bis 6 C-Atomen, erhalten werden,
wobei sich die Angaben in Gew.-% auf 100 Gew.-% aufaddieren.

3. Verwendung nach Anspruch 1 oder 2, **dadurch gekennzeichnet, dass** ein oder mehrere ethylenisch ungesättigte Monocarbonsäuren copolymerisiert werden, aus der Gruppe umfassend Acrylsäure, Methacrylsäure, Crotonsäure.

4. Verwendung nach Anspruch 1 bis 3, **dadurch gekennzeichnet, dass** in Gegenwart von Mercaptoessigsäure und/oder Mercaptopropionsäure polymerisiert wird.

## Claims

1. Use of solid polyvinyl acetate resins functionalized by acid groups as low-profile additives, **characterized in that** the solid polyvinyl acetate resin also contains terminal carboxy groups, besides carboxy-functional comonomer units.

2. Use according to Claim 1, where the solid polyvinyl acetate resins functionalized by acid groups are obtained via polymerization of
a) from 85 to 99.8% by weight of vinyl acetate, and
b) from 0.1 to 10% by weight of one or more ethylenically unsaturated monocarboxylic acids,
in the presence of
c) from 0.1 to 5% by weight of one or more mercaptoalkylcarboxylic acids having from 2 to 6 carbon atoms,
the data in % by weight giving a total of 100% by weight.

3. Use according to Claim 1 or 2, **characterized in that** one or more ethylenically unsaturated monocarboxylic acids from the group consisting of acrylic acid, methacrylic acid, crotonic acid are copolymerized.

4. Use according to any of Claims 1 to 3, **characterized in that** polymerization takes place in the presence of mercaptoacetic acid and/or mercaptopropionic acid.

## Revendications

1. Utilisation de résines solides de polyacétate de vinyle fonctionnalisées avec des groupes acides en tant qu'additif à faible retrait, **caractérisée en ce que** la résine solide de polyacétate de vinyle renferme, en plus de motifs comonomères à fonction carboxyle, également des groupes carboxyle terminaux.

2. Utilisation selon la revendication 1, dans laquelle les résines solides de polyacétate de vinyle fonctionnalisées avec des groupes acides sont obtenues par la polymérisation :
a) de 85 à 99,8 % en poids d'acétate de vinyle, et
b) de 0,1 à 10 % en poids d'un ou de plusieurs acides monocarboxyliques éthyléniquement insaturés,
en présence :
c) de 0,1 à 5 % en poids d'un ou de plusieurs acides mercaptoalkylcarboxyliques renfermant de 2 à 6 atomes de carbone,
où la somme des données en % en poids est de 100 % en poids.

3. Utilisation selon la revendication 1 ou 2, **caractérisée en ce qu'**un ou plusieurs acides monocarboxyliques éthyléniquement insaturés sont copolymérisés, parmi le groupe comprenant l'acide acrylique, l'acide méthacrylique, l'acide crotonique.

4. Utilisation selon les revendications 1 à 3, **caractérisée en ce que** la polymérisation est réalisée en présence d'acide mercaptoacétique et/ou d'acide mercaptopropionique.
